# EUROPEAN PATENT SPECIFICATION

(11) **EP 4 124 229 B1**
(45) Date of publication and mention of the grant of the patent: **28.10.2026**
(21) Application number: 22185946.5
(22) Date of filing: 20.07.2022
(51) Int. Cl.: A01D 34/695, A01D 34/81

(54) **MOBILE DEVICE FOR CUTTING GRASS OF THE AIR CUSHIONED TYPE HAVING AN IMPROVED CHASSIS**
MOBILES GERÄT ZUM RASENMÄHEN VOM TYP LUFTKISSEN-RASENMÄHER MIT VERBESSERTEM GEHÄUSE
DISPOSITIF MOBILE POUR COUPER L'HERBE DU TYPE À COUSSIN D'AIR AVEC UN CHÂSSIS AMÉLIORÉ

(30) Priority: 27.07.2021 IT 202100020078; 31.08.2021 IT 202100022601
(43) Date of publication of application: 01.02.2023
(73) Proprietor: Stiga S.p.A. in breve anche St. S.p.A., 31033 Castelfranco Veneto (TV) (IT)
(72) Inventor: PANDIN, Enrico, Villorba (TV) (IT); CAMERON, James, Treviso (IT); NIRO, Adriano, Treviso (IT)
(74) Representative: PGA S.p.A.

(56) References cited:
- EP-A1- 0 045 177
- WO-A1-94/01994
- GB-A- 2 028 089
- US-A- 5 210 996
- US-A- 5 566 534

## Description

### Field of the Invention

The present invention relates to a device (manual or automatic) commonly known as a hover mower and usable for the maintenance of turfgrasses, for example of turfgrasses in private homes.

### Background art

As is known in the background art, a manually driven device for cutting grass of the hover mower type is provided with an impeller for generating an airflow intended to cause a floating effect such as to keep the mobile grass cutting device raised with respect to the land and thus allow it to advance. The grass cutting device comprises a payload (cutting blade), an impeller (a radial fan) and a body. An inner surface of the body defines a cavity for housing the payload and the impeller. The body cavity is in fluid communication with the external environment through an opening delimited by an edge of the body.

Among the documents of the background art, patent application WO2010/062199A2 discloses an example of a hover mower type device for cutting grass, depicted in figure 11 together with the air flow generated by the relative impeller to keep the device suspended and to allow the grass, after being cut by the payload, to be evacuated from the cavity inside the body.

The Applicant has found that the aforementioned technical solution referred to in patent application WO2010/062199A2 has objective drawbacks, such a technical solution having a particular shortfall from the point of view of energy efficiency, implying high consumption and requiring a rotation of the impeller at a particularly high number of revolutions, with the consequent generation of vibrations and noises. Document EP0045177A1 discloses a hover mower type lawnmower device, comprising a chute communicating with the cutting chamber, so as to allow the cut grass to be discharged through the chute. Document GB2028089A discloses an hover mower type lawnmower device, comprising an edge intended to deflect the floatation air flow downwards and inwards. Document US5,210,996 discloses a hover mower type lawnmower device, capable of reducing the leakage of pressurized air below the body. Document US5,566,534 discloses a hover mower type lawnmower device, capable of obtaining the centrifugation of the cut grass. Document WO94/01994A1 discloses a device for cutting grass comprising a frame, a handlebar applied to the frame, a battery positioned adjacent to a gripping portion of the handlebar and a solar cell panel positioned between the battery and the frame.

### Objects of the invention

The present disclosure aims to overcome the drawbacks found with reference to the technical solution referred to in patent application WO2010/062199A2 and more generally to the prior art in the field of hover mower lawnmowers.

It is therefore an object of the present disclosure to provide a hover mower type device for cutting grass which is characterized by optimal energy efficiency.

It is a further object of the present disclosure to provide a hover mower type device for cutting grass which can operate at a reduced number of revolutions.

It is a further object of the present disclosure to provide a hover mower type device for cutting grass which, in use, is quieter and generates a lower amount of vibration. It is a further object of the present disclosure to provide a hover mower type device for cutting grass which, in use, denotes an improved floating effect and which, in particular, with the same number of revolutions, generates a greater lifting force.

It is a further object of the present disclosure to provide a hover mower type device for cutting grass which, in use, allows a better expulsion of the cut grass.

It is a further object of the present disclosure to provide a hover mower type device for cutting grass which is comfortable to handle manually.

It is a further object of the present disclosure to provide a hover mower type device for cutting grass which is inexpensive and easy to produce.

The invention provides a device for the land maintenance in accordance with claim 1.

Further preferred embodiments are defined by the dependent claims.

### Presentation of the figures

In the figures accompanying the following detailed description:
- figure 1 and figure 2 are axonometric depictions (respectively from above and below) of a land maintenance device according to an example which does not fall within the scope of independent claim 1,
- figure 3 is an axonometric depiction of a land maintenance device according to an advantageous variant being a further example which does not fall within the scope of independent claim 1,
- figure 4 and figure 5 are sectional depictions (respectively according to a plane orthogonal to the axis of the body of the device and according to a plane passing through the axis of the body of the device) of components of the device referred to in figures 1 and 2 or of the device referred to in figure 3;
- figure 6 and figure 7 are comparative screens, obtained by a finite element simulation program, which respectively illustrate the fluid dynamic behaviour of a reference body and a body according to the present invention.

### Detailed description

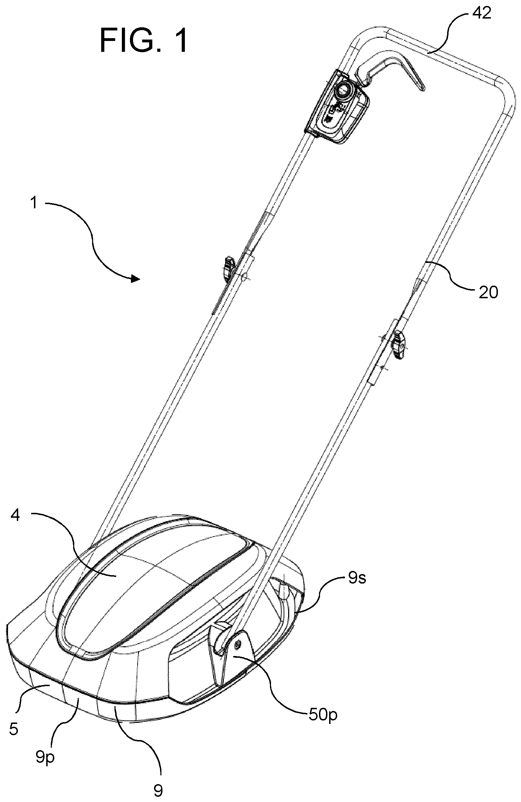

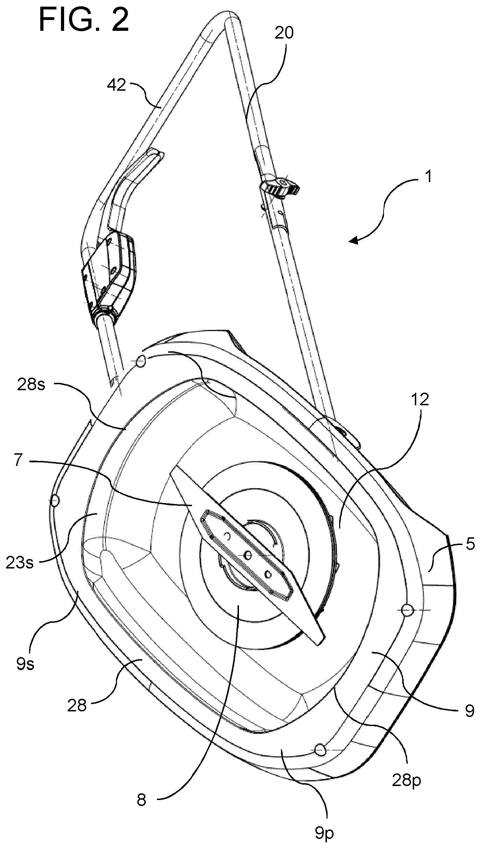

Figures 1 and 2 show a device 1 not falling within the claimed scope but useful for understanding the invention. The device 1 is of the mobile type and is in particular manually driven (this does not preclude in any case that, in an alternative embodiment of the invention, the device can be automatically driven). The device 1 is responsible for performing a land maintenance operation. Since such maintenance operation is, in particular, a grass cutting operation, the device 1 comprises a payload 7 which, in the example shown in the figures, is a cutting blade. In particular, in the example shown (see in particular figure 2), the cutting blade is a metallic blade longitudinally extended between two opposite ends, each of which is provided with a cutting edge. However, the use of a cutting blade with a different number of cutting tips and/or edges or of a different type (for example, a discoidal blade), as well as the use of an alternative cutting to a metal blade (for example a cutting edge) is not precluded.

The device 1 belongs to the hover mower type of lawnmowers, i.e., lawnmowers which make use of a forced air flow to generate a lifting action with respect to the ground, such a lifting action allowing the lawnmowers to float during their advancement within a work area and to maintain a height with respect to the ground which is suitable for performing the lawn mowing operation.

To this end, the device 1 further comprises an impeller 8 which, in the example depicted in the figures, is of the type which envisages a suction mainly from an axial direction and a delivery mainly in the radial direction. However, the invention is not limited in such a sense, since the impeller can belong to a different type, just as it is not limited in the number and shape of the blades with which the impeller 8 is provided. Advantageously, the impeller 8 is a monoblock element made of plastic material.

The device 1 further comprises a body 9 enclosing a cavity 10 inside which the payload 7 and the impeller 8 are housed. The body 9 exhibits an inner surface 18 which defines the cavity 10.

The inner surface 18 defining the cavity 10 is ideally shaped so as to uniquely identify two planes of symmetry for the cavity 10, such planes of symmetry being orthogonal to each other. The shape of the inner surface 18 (and consequently of the cavity 10) is such as to be able to uniquely identify also an axis C-C for the body 9, such an axis C-C positioning itself in the centre of the cavity 10 and in particular coinciding with the line of intersection between the two planes of symmetry of the inner surface 18 and/or coinciding with the axis of the impeller 8. It should be specified that, although neither the inner surface 18 nor the cavity 10 is overall axial-symmetrical in shape, it is in any case entirely appropriate to use parameters such as angular position and/or angular coordinate and/or diameter and/or radius to refer to specific points of the body 9 and/or of the inner surface 18 and/or of the cavity 10, given the unique identification of the axis C-C of the body 9. In a non-claimed example, the cavity 10 has a roughly cup-shaped form with a roughly rectangular base, the axis C-C of the body 9 crossing the cavity 10 always in a central position.

The planar extension of the body 9 is such that the body 9 can be divided into a first half-body 9p and a second half-body 9s. The first half-body 9p can also be defined the front half-body, as the second half-body 9s can also be defined the rear half-body, as the first half-body 9p is intended to precede the second half-body 9s along the advancement direction of the device 1. In this regard, the Applicant intends to underline that the embodiment of the body 9 depicted in the figures (for which two planes of symmetry are identifiable and wherein the first half-body 9p and the second half-body 9s are substantially equal to each other) does not fall within the scope of attached independent device claim 1, since according to the invention the first half-body 9p differs from the second half-body 9s in shape and/or sizing. The body 9 of the device 1 defines, in addition to the cavity 10, also a mouth 30, which is in fluid communication with the cavity 10 and, from a fluid dynamic point of view, is arranged immediately upstream with respect to the cavity 10, so that the outlet section of the mouth 30 coincides with the inlet section of the cavity 10. In an axial direction, the inner surface 18 of the body 9 thus extends between the outlet section of the mouth 30 (defined by the edge 91 of the body 9) and an opening 12 (defined by the edge 28 of the body 9), where the opening 12 is placed on the lower face of the device 1 or on the face which, in use conditions of the device 1, faces the land. The mouth 30 and the opening 12 are configured to place the cavity 10 in fluid communication with the external environment. In particular, the mouth 30 is configured to perform the function of intake section for the forced airflow processed by the impeller 8, while the opening 12 is configured to perform the function of intake section for the forced airflow processed by the impeller 8, while the opening 12 is configured to perform the function of discharge section for the forced airflow processed by the impeller 8. Therefore, it is through the opening 12 that the air flow is released from the device 1 which determines the desired lifting action, thus making the device 1 float with respect to the land during the advancement thereof in the work area. Furthermore, the opening 12 allows the grass to be cut to creep into the cavity 10 until it reaches the payload 7 and also allows the cut grass to be evacuated from the cavity 10.

In the example depicted in the figures, the opening 12 has a flat section (this does not preclude, however, that the opening 12 can alternatively have a non-planar section, for example a cylindrical section). The opening 12 advantageously lies on a plane which can be assumed as the bottom plane F of the body 9, where the bottom plane F is substantially orthogonal to the axis C-C of the body 9 and, under use conditions of the device 1, is ideally parallel to the land. For the body 9, it is possible to further identify a head plane T as the lying plane of the outlet section of the mouth 30, or of the inlet section of the cavity 10. The head plane T is substantially orthogonal to the axis C-C of the body 9 and is ideally parallel to the bottom plane F. It is therefore possible that, in an axial direction (i.e., following the axis C-C of the body 9), the cavity 10 extends between the head plane T and the bottom plane F.

The installation of the payload 7 and of the impeller 8 inside the cavity 10 is such that they are both ideally coaxial with respect to the axis C-C. Although an independent movement for the payload 7 and for the impeller 8 is not precluded, in an advantageous embodiment of the present invention, there is an evident functional interaction between the payload 7 and the impeller 8, a shared movement between the payload 7 and the impeller 8 is envisaged. To this end, the device 1 comprises a motor 15 coupled to the payload 7 and to the impeller 8. For simplicity of construction, the payload 7 and the impeller 8 are both directly coupled to the motor 15, whereby the rotational speed of the payload 7 and the rotational speed of the impeller 8 coincide with the rotational speed of the motor 15, while the peripheral speed of the payload 7 and the peripheral speed of the impeller 8 are determined by the rotational speed of the motor 15 in combination with the radial extension of the payload 7 and the impeller 8, respectively. Obviously needing to be exposed to the land (so that it can be reached by the grass to be cut for the execution of the cutting operation), the payload 7 is arranged in an apical position, the impeller 8 being consequently arranged in an intermediate position between the motor 15 and the payload 7. In an embodiment of the present invention, the payload 7 and the impeller 8 are respectively fastened to an apical portion and an intermediate portion of the crankshaft. In an alternative embodiment, the impeller 8 is fastened to an apical portion of the crankshaft and comprises, on a side opposite the fastening side to the crankshaft, a coupling configured to fasten the payload 7 to the impeller 8 (and thus indirectly to the crankshaft).

Usefully, the coupling of the payload 7 and the impeller 8 to the motor 15 is such that adjustments of the distance in the axial direction between the motor 15 and the payload 7 and/or of the distance in the axial direction between the motor 15 and the impeller 8 are allowed. Adjustments in particular of the distance in the axial direction between the motor 15 and the payload 7 are particularly advantageous since the payload 7 can thus be brought closer to the land or away from the land (allowing the height of the grass to be adjusted). Furthermore, the coupling of the payload 7 and of the impeller 8 to the motor 15 is advantageously such that removals of the payload 7 and/or of the impeller 8 are allowed, for example for the purpose of performing the replacement thereof with a respective spare part.

The motor 15 can be an electric motor or an internal combustion motor. In the preferred embodiment of the present invention, the motor 15 is an electric motor powered by a rechargeable and removable on-board battery, such that the operator, once the battery charge is depleted, can arrange for the extraction thereof from the device 1 in order to perform the connection thereof to an external charging device. In fact, the use of an electric motor powered by a rechargeable on-board battery significantly improves the energy efficiency, silence and driving comfort of the device 1. The motor 15 is advantageously housed at least in part at the mouth 30 of the body 9, where the air flow sucked by the impeller 8 transits, so that such an air flow can also act as a cooling flow of the motor 15.

The Applicant intends to clarify that, although the one with at least one rechargeable and removable battery can be considered the preferred embodiment, the invention is by no means to be understood as limited in this regard. In fact, the motor 15 can be powered directly from a power supply mains, the device 1 being provided with a power cord and a plug at the end of the power cord to connect it to the power supply mains. Alternatively, the motor 15 can be an internal combustion motor (in particular a combustion engine), in which case the device 1 is provided with a tank for the introduction and containment of fuel, means for transferring the fuel from the tank to the motor 15 (in particular a pump) and means for injecting the fuel into the combustion chamber of the motor 15 (in particular at least one calibrated nozzle). The body 9 is obtained in plastic or metallic or composite material and has an adequately reduced thickness so as not to weigh excessively on the weight of the device 1 and thus not to impair the floating capacity thereof. The body 9 is advantageously a monoblock element of the device 1, so as to facilitate the manufacture thereof and subsequent assembly to the remaining components of the device 1. In a particularly advantageous embodiment of the present disclosure, the body 9 is a monoblock element made of plastic material by means of a moulding operation.

The device 1 advantageously comprises a cover 4 connected to the body 9 (for example by means of screws) so as to create an internally hollow body, in which components such as the motor 15, the control unit (if present) and the on-board batteries can be housed (if present, in which case the cover 4 can include an access door to the on-board batteries). In order to obtain an optimal coupling with the cover 4, the body 9 can include a flange 5 which extends from a portion surrounding the opening 12.

The device 1 (in the manually driven embodiment) further comprises a handlebar 20 configured to be, in a gripping portion thereof, grasped by the operator in order to determine the advancement thereof. Control devices (e.g., an ignition button and/or an enabling lever of the impeller 8 and the payload 7) and/or display devices (e.g., a warning light of the charge level of the on-board battery) can be associated with the handlebar 20. The handlebar 20 is constrained to the body of the device 1. In an embodiment of the present invention, the handlebar 20 is constrained to the body 9, extending in particular from a longitudinally central region of the body 9 until it passes the second half-body 9s, i.e., the rear half-body. To this end, the body 9 comprises a first turret 50p and a second turret 50s which protrude from opposite lateral portions of the body 9 away from the bottom plane F and which are configured to allow the anchoring of the ends of the handlebar 20.

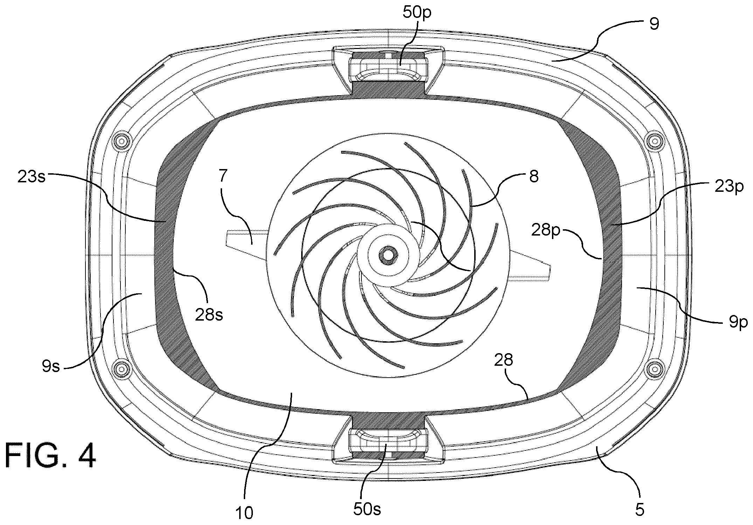

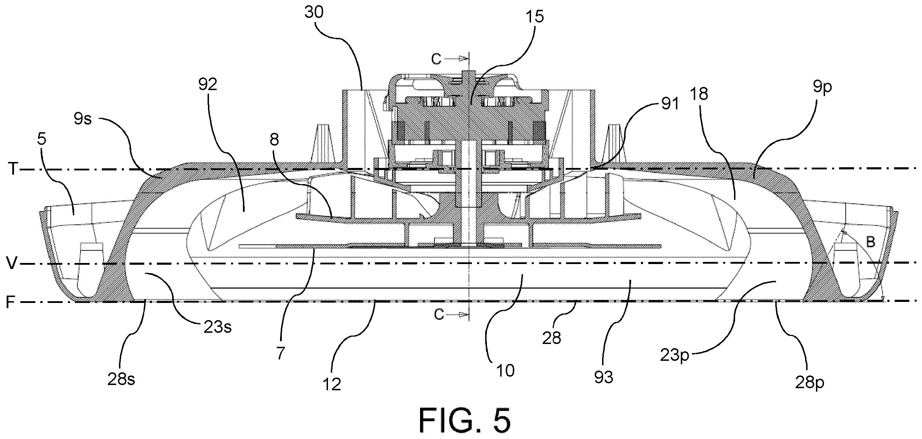

The body 9 is configured to achieve an improvement of the relative fluid-dynamic behaviour, intended primarily to optimize the floating effect of the device 1 with respect to the land and/or the lifting action exerted by the air cushion. The inventive features of the body 9 can be appreciated above all by figures 4 and 5, which respectively depict the body 9, the payload 7, the impeller 8 and the motor 15 firstly sectioned according to a plane parallel to the bottom plane F and orthogonal to the axis C-C and then sectioned according to a plane orthogonal to the bottom plane F and passing through the axis C-C.

Figures 4 and 5 above all show the inventive features of the inner surface 18 of the body 9, in particular near the edge 28 of the body 9 which defines the opening 12. In fact, figures 4 and 5 show that the inner surface 18 of the body 9 comprises, adjacent to a stretch 28p of the edge 28, a wall 23p shaped so as to form a converging deflector profile, where converging deflector profile is intended as a deflector profile configured to confer to an airflow exiting the cavity 10 through the opening 12 at least one centripetal radial component, or a radial component oriented towards the axis C-C. According to possible embodiments (here stated merely by way of non-limiting explanation), the extension of the stretch 28p of the edge 28 is between 155 mm and 700 mm, preferably between 310 mm and 700 mm. It can also be noted that the inner surface 18 of the body 9 comprises, adjacent to a further stretch 28s of the edge 28, a further wall 23s shaped so as to also form a converging deflector profile. Finally, it can be noted that ideally the aforementioned stretches 28p and further stretches 28s are stretches of the edge 28 of the body 9 diametrically opposite each other, as well as that ideally the converging deflector profiles defined by the wall 23p and by the further wall 23s are identical to each other.

It is intended to underline that the configuration illustrated in the figures is to be considered only as an example given by way of non-limiting explanation (although such an embodiment achieves its own specific advantages, including a particular arrangement of the body 9 to be made by means of a moulding operation), for which multiple alternative embodiments can be conceived. For example, in an alternative embodiment of the present invention, an inner wall shaped to form a converging deflector profile extends adjacent to the entire edge 28 of the body 9, so that the converging deflector profile formed by such an inner wall extends seamlessly around the opening 12.

The Applicant has noted that, in order to achieve a particularly significant improvement of the fluid dynamic behaviour of the body 9, it is important that the inner wall shaped so as to form a converging deflector profile extends adjacent to the edge 28 of the body 9 for at least 20% of the extension of the edge 28. A better fluid dynamic behaviour is obtained if said inner wall extends adjacent the edge 28 of the body 9 for at least 25% of the extension of the edge 28. An even better fluid dynamic behaviour is obtained if said inner wall extends adjacent the edge 28 of the body 9 for at least 40% of the extension of the edge 28. An optimal fluid dynamic behaviour is obtained if the inner wall shaped so as to form a converging deflector profile extends adjacent to the edge 28 of the body 9 for 100% of the extension of the edge 28 (or in the above-mentioned embodiment of the present invention in which the converging deflector profile formed by the inner wall extends seamlessly around the opening 12).

If the inner surface 18 of the body 9 is configured so as to define two or more distinct and separate inner walls, each of which is shaped so as to form a converging deflector profile, a fluid dynamic behaviour of interest has been observed by the Applicant if said inner walls, as a whole, extend adjacent to the edge 28 of the body 9 for at least 20% of the extension of the edge 28. A better fluid dynamic behaviour is obtained if said inner walls, as a whole, extend adjacent to the edge 28 of the body 9 for at least 25% of the extension of the edge 28. An even better fluid dynamic behaviour is obtained if such internal walls, as a whole, extend adjacent to the edge 28 of the body 9 for at least 35% or for at least 40% of the extension of the edge 28. In the non-claimed example shown in the figures, the edge 28 defines an opening 12 of roughly rectangular shape with smaller sides of approximately 340 mm and larger sides of approximately 440 mm, the smaller sides of the rectangle being the front side and the rear side according to the advancement direction of the device 1 in use, the larger sides of the rectangle being the right side and the left side according to the advancement direction of the device 1 in use. Corresponding the stretch 28p and the further stretch 28s of the edge 28 respectively with the front side and with the rear side according to the advancement direction of the device 1 in use, it is possible that the wall 23p and the further wall 23s shaped so as to form respective converging deflector profiles extend, as a whole, adjacent to the edge 28 of the body 9 for about 43% of the extension of the edge 28, therefore ensuring a very valid fluid dynamic behaviour of the body 9.

The mouth 30 can have substantially constant diameter and/or surface extension (or the mouth 30 can ideally retain, along the entire axial extension thereof, the same diameter exhibited at the corner 91). Preferably, the body 9 is configured so that, to an observer moving along the axis C-C in the direction of the airflow, the cavity 10 first exhibits a portion 92 of increasing diameter and/or surface extension and then a portion 93 of decreasing diameter and/or surface extension. This can be seen in particular in figure 5 , depicting, in order, the head plane T (where the transition occurs between the mouth 30 and the dimensionally increasing portion 92), then the intermediate plane V (where the transition occurs between the dimensionally increasing portion 92 and the dimensionally decreasing portion 93) and finally the bottom plane F (placed at the opening 12).

The intermediate plane V is therefore positioned at the section of the cavity 10 characterized by the maximum amplitude, that is to say by the maximum diameter and/or by the maximum surface extension, such an amplitude then decreasing progressively until reaching a relative minimum at the opening 12. Exemplarily, the area of the opening 12 is between 97% and 99% of the area of the section of maximum amplitude, or of the area of the section of the cavity 10 at the intermediate plane V. Still exemplarily, the distance (measured along the axis C-C) between the section of the cavity 10 of maximum amplitude and the opening 12 (or the distance between the intermediate plane V and the bottom plane F) is between 25% and 45% of the distance (measured along the axis C-C) between the outlet section of the mouth 30 and the opening 12 (or the distance between the head plane T and the bottom plane F). In the embodiment depicted in figure 5 , the distance (measured along the axis C-C) between the section of the cavity 10 of maximum width and the opening 12 (or the distance between the intermediate plane V and the bottom plane F) is equal to about 30% of the distance (measured along the axis C-C) between the outlet section of the mouth 30 and the opening 12 (or the distance between the head plane T and the bottom plane F). Advantageously, the distance (measured along the axis C-C) between the section of the cavity 10 of maximum width and the opening 12 (or the distance between the intermediate plane V and the bottom plane F) is between 17.5 mm and 44 mm, preferably between 22 mm and 35 mm, even more preferably about 24.5 mm.

Still in figure 5 , it can be appreciated that, in an embodiment of the present invention, the inner surface 18 of the body 9 has progressive and/or gradual variations so that the pressure losses are minimized, with the exception of the transition between the mouth 30 and the portion 92 dimensionally increasing at the head plane T (where the inner surface 18 exhibits a sudden variation which punctually leads it from extending parallel to the axis C-C to extending substantially orthogonally to the axis C-C, so as to follow the 90° deviation of the airflow induced by the impeller 8).

Still in the embodiment of the present invention referred to in figure 5, the inner surface 18 of the body 9 defines a divergent trend at the dimensionally increasing portion 92, while it defines a convergent trend at the dimensionally decreasing portion 93. In particular, a progressive and/or gradual transition is observed from a substantial perpendicularity with respect to the axis C-C at the head plane T (where the divergent trend of the inner surface 18 knows a maximum thereof) to a predetermined inclination at the bottom plane F, or at the opening 12 defined by the edge 28 (where the convergent trend of the inner surface 18 knows a maximum thereof), passing through a punctual parallelism with respect to the axis C-C at the intermediate plane V (where the divergent trend of the inner surface 18 is exhausted and the convergent trend is established). The transition at the intermediate plane V occurs in particular by providing chamfers and/or fittings, so as to minimize the pressure losses.

Parameterizing, by means of the angle which the plane tangent to the wall 23p defines with the bottom plane F at the stretch 28p of the edge 28 delimiting the opening 12 (such an angle being called the detachment angle B), the inclination of the wall 23p with respect to the bottom plane F at the stretch 28p and underlining that the geometric features (and consequently the functional features) of the wall 23p and of the further wall 23s are ideally identical to each other and that therefore what refers to the wall 23p is to be understood as applicable as such to the further wall 23s, it is observed in particular in figure 5 that the wall 23p extends between the intermediate plane V and the bottom plane F and progressively and/or gradually varies the inclination thereof, starting from a condition of perpendicularity with respect to the intermediate plane V and reaching a condition of inclination with respect to the bottom plane F equal to the inclination defined by the detachment angle B.

The Applicant has observed a significant increase in the lifting force and therefore an interesting improvement of the floating effect when the detachment angle B has an amplitude between 15° and 85°, in particular between 20° and 70°.

An optimal lifting force and floating effect were observed with a detachment angle B between 55° and 65°, especially with a detachment angle B of about 60°.

In the shape of the wall 23p shown in the figures, the inclination of the wall 23p follows a law whereby it varies progressively and/or gradually as it moves along the axis C-C. In particular, the wall 23p does not have abrupt variations in section, nor does it have sharp corners.

The Applicant intends to specify that the shape of the wall 23p shown in the figures, although particularly advantageous in that it confers to the airflow exiting the opening 12 a centripetal radial component such as to ensure the desired increase in the lifting force, is to be understood merely by way of example, as alternative shapes for the wall 23p are possible.

Among such alternative shapes, mention can be made of a first alternative shape according to which the inclination of the wall 23p is constantly equal to the inclination defined by the detachment angle B and a second alternative shape according to which the wall 23p is divided into a first connection area and a second release area, in the first connection area the inclination of the wall 23p varying progressively and/or gradually until reaching the inclination defined by the detachment angle B, in the second connection area the inclination of the wall 23p remaining constant and corresponding to the inclination defined by the detachment angle B.

More generally, regarding the shape of the wall 23p, the Applicant intends to specify that the present invention is not to be considered limited as to the extension and/or inclination and/or curvature of such a wall 23p.

### Advantages of the invention

From what has been described in detail above, it is understood that the present disclosure fully achieves the objectives underlying it, in particular a significant improvement in the fluid dynamic characteristics of the air cushion type grass cutting device 1, such a significant improvement resulting in a significant increase in the lifting force, as well as a significant improvement in the buoyancy effect.

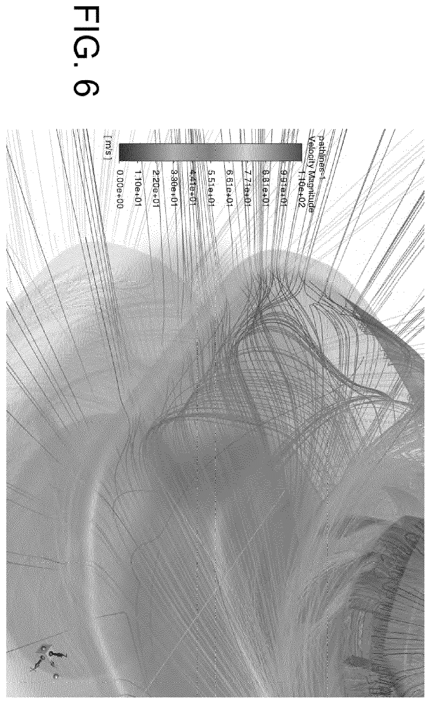

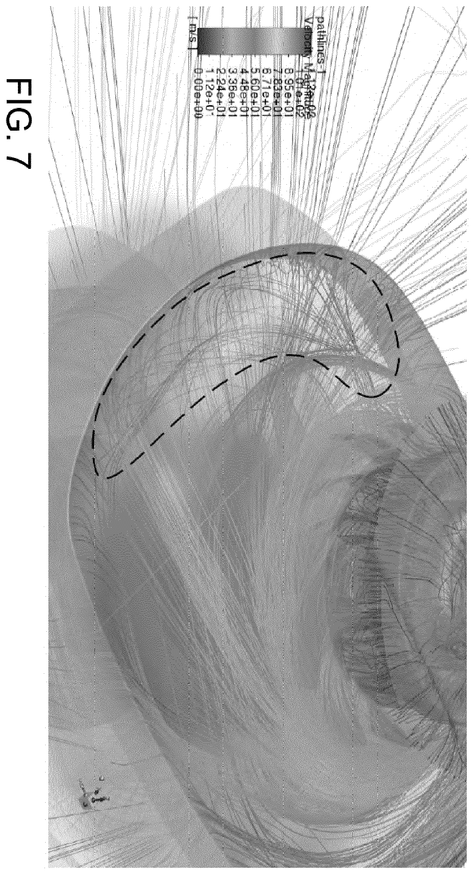

In order to provide solid evidence of the scope of the present invention, figures 6 and 7 are attached hereto showing, in the form of screens, the results of simulations obtained by means of a finite element simulation program, in particular obtained by means of the Ansys Fluent computational fluid dynamics program.

The screen referred to in figure 7 is obtained on the basis of the geometry of the body 9 according to the invention (in particular of the body depicted in figures 4 and 5), while the screen referred to in figure 6 is obtained on the basis of the geometry of a reference body which differs from the body 9 referred to in figures 4 and 5 in that it has, adjacent to the stretch 28p and to the further stretch 28s of the edge 28 delimiting the opening 12, walls perpendicular to the bottom plane F and parallel to the axis C-C of the body (in place of the wall 23p and the further wall 23s as described and depicted).

The screens of figures 6 and 7 provide an effective comparative depiction from which the effects of the present invention emerge clearly.

In particular, the screens of figures 6 and 7, obtained by simulating the rotation of the impeller 8 at the same number of revolutions and at the same distance from a representative base surface of the land, show how the flow lines are modified by passing from the reference body to the body 9 according to the invention, or how the flow lines are modified due to the wall 23p and the further wall 23s as described and depicted.

Figure 6 shows that the flow lines inside the reference body have a main vertical direction, so that, once the body cavity is abandoned, they impact the base surface, after which they are dispersed in a significant part outside the body (the airflow which is dispersed outside the body does not contribute to the floating effect).

From figure 7, it can instead be seen that the flow lines within the body 9 according to the invention tend to form a vortex which circulates inside the cavity 10 and which tends to retain the airflow between the body 9 and the base surface, thus greatly enhancing the floating effect (flow lines which describe part of the vortex path in the volume at the region of the cavity 10 in front of the wall 23p adjacent to the stretch 28p of the edge 28 are highlighted by the dashed-line outline added to the screen of figure 7). Therefore, it can be seen from figure 7 that the present invention, even without determining appreciable variations in the speeds of the air moved by the impeller 8, has the result that a much more consistent, persistent and stable air cushion is formed, the lifting force acting in particular on the body 9 and in general on the device 1 thus being maximised. Looking at the screen of figure 7, it is understood how the converging deflector profile formed by the wall 23p effectively conveys the airflow moved by the impeller 8, in fact behaving as a conduit inside the cavity 10 and surrounding the opening 12.

The Applicant intends to point out that the comparison between the screens of figures 6 and 7 unequivocally demonstrates that the present invention overcomes an obvious technical prejudice. In fact, those skilled in the art, intended to optimize the lifting force acting on the device, would certainly have been of the opinion of preferring the reference body, since in the reference body the thrust action induced by the airflow moved by the impeller is exerted in the axial direction, or precisely in the same direction as the lifting force. The comparison between figures 6 and 7 instead demonstrates how, by subtracting a part of the flow from the axial direction to attribute it to the centripetal radial direction, the lifting force is enhanced (rather than weakened, as those skilled in the art would expect) by virtue of the vortex inside the body 9 which acts to consolidate the air cushion.

In particular, by means of the simulations at the base of the screens shown in figures 6 and 7, it has been calculated that, with the same rotation speed of the motor 15, the increase in the lifting force obtained by virtue of the present invention is about 30%.

Having obtained the primary effect of significantly and surprisingly improving the fluid-dynamic features of the device 1, the present invention allows to achieve further advantages strictly connected to such improved fluid-dynamic features.

In particular, the present invention allows a significant increase in the energy efficiency of the device 1. In this regard, it should be noted that, while for a device provided with the reference body a rotational speed of the motor of about 6200 rpm (corresponding to a peripheral speed of the payload greater than 90 m/s, exactly 97.4 m/s with a nominal payload having a nominal diameter of 300 mm) is necessary to obtain a suitable lifting force, for a device 1 provided with the body 9 according to the invention a suitable lifting force can be obtained with a rotational speed of the motor of about 5000 rpm (corresponding to a peripheral speed of the payload of about 78.5 m/s with a nominal payload having a nominal diameter of 300 mm).

In addition to the benefits in terms of energy efficiency determined by the reduced number of motor revolutions, additional ones are also determined, for example, by attenuating the vibrations, which makes manually driving the device 1 significantly less tiring and less expensive. Furthermore, the present invention allows to obtain a more comfortable manual driving of the device 1 also from an acoustic point of view, the noises connected to the operation of the device 1 being significantly attenuated. Furthermore, the improved fluid dynamic features allow to achieve additional advantages such as an increase in performance, greater driving comfort and an improved expulsion of the cut grass.

Finally, the Applicant intends to point out that the present invention allows for considerable flexibility in the design of the device 1 (for which a plurality of operator-adoptable settings can also be included). In fact, by favouring the performance of the device 1, it is possible to maintain the traditional number of revolutions and thus obtain an improved floating effect with the generation of a considerably more robust air cushion. By favouring the efficiency of the device 1, it is possible to reduce the number of revolutions up to a minimum value capable of ensuring an optimal cutting quality.

The Applicant has observed, by means of objective experimental tests how a surprising increase in the floating force is obtained when the amplitude of the detachment angle B is about 55° or about 55.1° or about 55.2° or about 55.3° or about 55.4° or about 55.5° or about 55.6° or about 55.7° or about 55.8° or about 55.9° or about 56° or about 56.1° or about 56.2° or about 56.3° or about 56.4° or about 56.5° or about 56.6° or about 56.7° or about 56.8° or about 56.9° or about 57° or about 57.1° or about 57.2° or about 57.3° or about 57.4° or about 57.5° or about 57.6° or about 57.7° or about 57.8° or about 57.9° or about 58° or about 58.1° or about 58.2° or about 58.3° or about 58.4° or about 58.5° or about 58.6° or about 58.7° or about 58.8° or about 58.9° or about 59° or about 59.1° or about 59.2° or about 59.3° or about 59.4° or about 59.5° or of about 59.6° or about 59.7° or about 59.8° or about 59.9° or about 60° or about 60.1° or about 60.2° or about 60.3° or about 60.4° or about 60.5° or about 60.6° or about 60.7° or about 60.8° or about 60.9° or about 61° or about 61.1° or about 61.2° or about 61.3° or about 61.4° or about 61.5° or about 61.6° or about 61.7° or about 61.8° or about 61.9° or about 62° or about 62.1° or about 62.2° or about 62.3° or about 62.4° or about 62.5° or about 62.6° or about 62.7° or about 62.8° or about 62.9° or about 63° or about 63.1° or about 63.2° or about 63.3° or about 63.4° or about 63.5° or about 63.6° or about 63.7° or about 63.8° or about 63.9° or about 64° or about 64.1° or about 64.2° or about 64.3° or about 64.4° or about 64.5° or about 64.6° or about 64.7° or about 64.8° or about 64.9° or about 65° (especially when the amplitude of the detachment angle B is about 60°). In fact, in conjunction with such values of the detachment angle B, the vortex which is established inside the cavity 10 creates (to an unexpected extent) a stable and robust air cushion. Therefore, the device 1 is maximally comfortable to lead, maximally efficient from an energy point of view and maximally arranged for a suitable expulsion of the cut grass, so that the advantages of the invention which can be found even with different values of the detachment angle B are significantly amplified.

### Variants of the invention

With respect to what has been described above, the invention lends itself to numerous variants, which share the same inventive concepts and therefore fall within the scope of protection defined by the following claims.

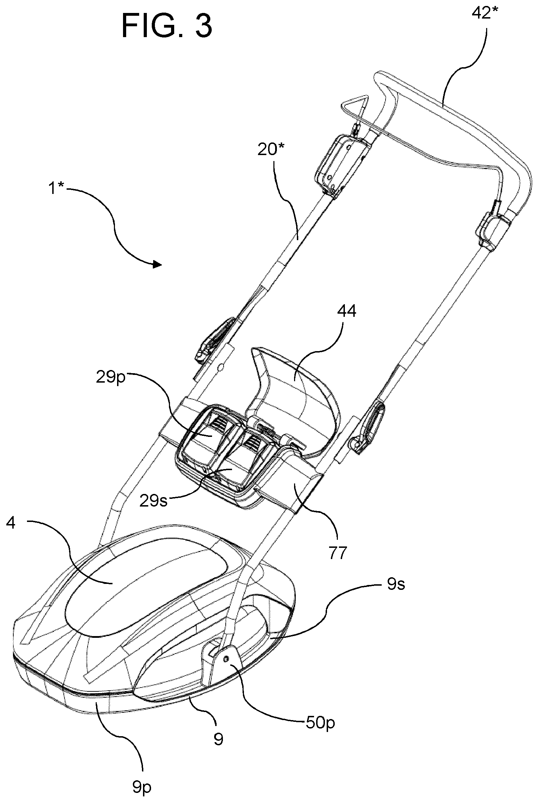

In addition to all the possible variants which envisage changes in the shapes and/or dimensions and/or materials of the device 1 (in particular of the body 9), the variant referred to in figure 3 which illustrates a device 1* for cutting grass which differs from the device 1 referred to in figures 1 and 2 in that it comprises at least one on-board battery applied to the handlebar and/or supported by the handlebar is noted.

The device 1* shown in figure 3 comprises an electric motor powered by a first on-board battery 29p and a second on-board battery 29s (both of a rechargeable and removable type) and is characterized in that both on-board batteries 29p and 29s are supported by the handlebar 20*.

In particular, the on-board batteries 29p and 29s are applied to a support bracket 77 which extends transversely between the longitudinal elements of the handlebar 20* (in particular maintaining a substantial parallelism with respect to the gripping portion 42*) and along which a compartment is obtained for housing the on-board batteries 29p and 29s, a cover 44 being associated to the compartment which is configured to determine a selective closure of the compartment.

The features of the body 9 of the device 1* depicted in figure 3 are identical to the features of the body 9 of the device 1 depicted in figures 1 and 2, so that the sectional views shown in figures 4 and 5 are also valid for the body 9 of the device 1*.

The variant shown in figure 3 is optimal especially with regard to energy efficiency and driving comfort since the effects of the present invention are synergistically combined with the effects of positioning the at least one battery at the handlebars (improved weight distribution, centre of gravity close to the gripping portion, environmental sustainability).

According to the invention (not depicted in the figures) the opening 12, instead of having a roughly rectangular shape, has an isosceles trapezium shape, since the body 9 includes a dimensional unevenness in the direction of its width, or, in the direction orthogonal to the advancement direction of the device 1 (or, otherwise said, in the direction substantially parallel to the gripping portion 42 of the handlebar 20). According to the invention, in fact, the first half-body 9p, or the front half-body, has, at least in one end region thereof, a smaller width with respect to the width of the second half-body 9s, or of the rear half-body, such a dimensional inconsistency between the half-bodies allowing the operator to immediately and safely recognize the first half-body 9p and the second half-body 9s. In light of the foregoing, it is understood how, according to the invention, the stretch 28p and the further stretch 28s of the edge 28 contribute to the definition of the opening 12 by respectively defining the minor base of the isosceles trapezoid and the major base of the isosceles trapezoid, whereby the wall 23p is less extended with respect to the further wall 23s. The Applicant intends to point out that, even if strictly speaking the body 9 according to the invention has a single plane of symmetry, nevertheless it is still entirely appropriate to use parameters such as angular position and/or angular coordinate and/or diameter and/or radius to refer to specific points of the body 9 and/or of the inner surface 18 and/or of the cavity 10, given that the axis C-C of the body 9 is in any case uniquely identifiable, at least because it coincides with the axis of the impeller 8 (therefore, it can be reasonably assumed that a substantial correspondence remains between each point belonging to the wall 23p and each point belonging to the further wall 23s).

A further variant (also not depicted in the figures) envisages that the body of the grass cutting device is an assembly formed by two or more bodies side by side (and especially also identical to each other), each of which is provided with its own payload, its own impeller and its own motor. The subdivision into a plurality of bodies allows to adopt a reduced sizing for each of such bodies and for the components associated with such bodies, thus being able to obtain a more effective cutting of grass in particularly critical positions, for example near obstacles or borders, or in positions which are difficult to access, for example under shrubs or hedges.

## Claims

1. Device (1; 1*) for the maintenance of a land, in particular for cutting grass, said device (1; 1*) comprising a payload (7), an impeller (8) and at least one body (9),
wherein said payload (7) is configured to operate, in use, a land maintenance operation, in particular a grass cutting operation of the land,
wherein said impeller (8) is configured to generate, in use, an air flow suitable to establish a floating condition of said device (1; 1*) with respect to the land and/or to maintain said device (1; 1*) in said floating condition with respect to the land,
wherein said body (9) is configured to house said payload (7) and said impeller (8),
wherein a cavity (10) for housing said payload (7) and said impeller (8) is defined by an inner surface (18) of said body (9),
wherein said impeller (8) is further configured to be rotated around an axis thereof, the rotation axis of said impeller (8) defining the axis (C-C) of said body (9),
wherein said cavity (10) is in fluid communication with the external environment through an opening (12), said opening (12) lying on a bottom plane (F) of said body (9), said bottom plane (F) being orthogonal to said axis (C-C) of said body (9) and, in use, parallel to the land,
wherein said opening (12) is delimited by an edge (28) of said body (9),
wherein at least one stretch (28p, 28s) of said edge (28) is the terminal edge of a respective wall (23p, 23s) of said inner surface (18) shaped so as to form, adjacent to said at least one stretch (28p, 28s) of said edge (28), a converging deflector profile, i.e. a deflector profile configured to confer to an airflow exiting from said cavity (10) through said opening (12) at least one radial component oriented towards said axis (C-C) of said body (9),
wherein said cavity (10) is further in fluid communication with the external environment through a mouth (30), an outlet section of said mouth (30) lying on a head plane (T) of said body (9), said head plane (T) being orthogonal to said axis (C-C) of said body (9) and parallel to said bottom plane (F),
wherein said cavity (10) extends axially between said head plane (T) and said bottom plane (F) and
wherein said cavity (10) is shaped so as to have in section a variable amplitude along said axis (C-C) of said body (9) with a law of variation such that a maximum amplitude section lies on an intermediate plane (V) parallel to said bottom plane (F) and to said head plane (T),
wherein the distance in the axial direction between said intermediate plane (V) and said bottom plane (F) is between 25% and 45% of the distance in the axial direction between said head plane (T) and said bottom plane (F) and
the device being **characterised in that**:
said body (9) comprises a first half-body (9p) and a second half-body (9s), wherein a portion of said first half-body (9p) has a dimensional inconsistency with respect to a portion of said second half-body (9s), said dimensional inconsistency being that the first half-body (9p) has at least in one end region thereof a smaller width with respect to the width of the second half-body (9s); and
**in that** said opening (12) has an isosceles trapezoid shape, said at least one stretch (28p) and the further stretch (28s) of said edge (28) respectively forming the minor base and the major base of said isosceles trapezoid.

2. Device (1; 1*) according to claim 1, wherein said body (9) is a monoblock element made of plastic material by means of a moulding operation.

3. Device (1; 1*) according to claim 1 or claim 2, wherein a plane tangent to said wall (23p, 23s) at said at least one stretch (28p, 28s) of said edge (28) defines with said bottom plane (F) a detachment angle (B), the amplitude of said detachment angle (B) being between 54.5° and 65.5°.

4. Device (1; 1*) according to claim 3, wherein the amplitude of said detachment angle (B) is 55° or 55.1° or 55.2° or 55.3° or 55.4° or 55.5° or 55.6° or 55.7° or 55.8° or 55.9° or 56° or 56.1° or 56.2° or 56.3° or 56.4° or 56.5° or 56.6° or 56.7° or of 56.8° or 56.9° or 57° or 57.1° or 57.2° or 57.3° or 57.4° or 57.5° or 57.6° or 57.7° or 57.8° or 57.9° or 58° or 58.1° or 58.2° or 58.3° or 58.4° or 58.5° or 58.6° or 58.7° or 58.8° or 58.9° or 59° or 59.1° or 59.2° or 59.3° or 59.4° or 59.5° or 59.6° or 59.7° or 59.8° or 59.9° or 60° or 60.1° or 60.2° or 60.3° or 60.4° or 60.5° or 60.6° or 60.7° or 60.8° or 60.9° or 61° or 61.1° or 61.2° or 61.3° or 61.4° or 61.5° or 61.6° or 61.7° or 61.8° or 61.9° or 62° or 62.1° or 62.2° or 62.3° or 62.4° or 62.5° or 62.6° or 62.7° or 62.8° or 62.9° or 63° or 63.1° or 63.2° or 63.3° or 63.4° or 63.5° or 63.6° or 63.7° or 63.8° or 63.9° or 64° or 64.1° or 64.2° or 64.3° or 64.4° or 64.5° or 64.6° or 64.7° or 64.8° or 64.9° or 65°.

5. Device (1; 1*) according to any one of claims 1 to 4, wherein said wall (23p, 23s) has, with respect to said bottom plane (F), a constant inclination and a value equal to said detachment angle (B).

6. Device (1; 1*) according to any one of claims 1 to 4, wherein said wall (23p, 23s) has, with respect to said bottom plane (F), a decreasing inclination until a value equal to said detachment angle (B) is reached.

7. Device (1; 1*) according to any one of the preceding claims, wherein the distance in the axial direction between said intermediate plane (V) and said bottom plane (F) is 30% of the distance in the axial direction between said head plane (T) and said bottom plane (F).

8. Device (1; 1*) according to any one of the preceding claims, wherein, taking a first point and a second point belonging to said inner surface (18) and diametrically opposite each other, a third point belonging to the line passing through said first point and said second point and equidistant from said first point and from said second point is positioned at said axis (C-C) of said body (9).

9. Device (1; 1*) according to any one of the preceding claims, wherein the axial distance between said payload (7) and said opening (12) is adjustable.

10. Device (1; 1*) according to any one of the preceding claims, wherein the axial distance between said impeller (8) and said opening (12) is adjustable.

11. Device (1; 1*) according to any one of the preceding claims, further comprising a motor (15) coupled to both said payload (7) and to said impeller (8), wherein said payload (7), said impeller (8) and said motor are coaxial with each other and coaxial with the axis (C-C) of said body (9).

12. Device (1; 1*) according to claim 11, wherein said motor (15) is configured to determine, in use, the simultaneous rotation of said payload (7) and said impeller (8) at an angular speed such as to achieve a peripheral speed of said payload (7) of 70 m/s.

13. Device (1; 1*) according to claim 11 or claim 12, wherein said motor (15) is an internal combustion motor and said device (1; 1*) further comprises a tank configured to allow the introduction and/or containment of a fuel and transfer means configured to allow the supply of said fuel to said motor (15) or said motor (15) is an electric motor and said device (1; 1*) further comprises a power cable configured to electrically connect said motor (15) to a power supply network.

14. Device (1; 1*) according to claim 11 or claim 12, wherein said motor (15) is an electric motor and said device (1; 1*) further comprises at least one on-board battery (29p, 29s) configured to electrically power said motor (15), said at least one on-board battery (29p, 29s) being of the rechargeable and removable type.

15. Device (1; 1*) according to claim 14, further comprising a handlebar (20; 20*) configured to allow the manual driving of said device (1; 1*), said handlebar (20; 20*) being constrained to said body (9), wherein said at least one on-board battery (29p, 29s) is applied to said handlebar (20; 20*) and/or supported by said handlebar (20; 20*).

## Patentansprüche

1. Vorrichtung (1; 1*) zur Pflege eines Geländes, insbesondere zum Schneiden von Gras, wobei die Vorrichtung (1; 1*) eine Nutzlast (7), ein Laufrad (8) und wenigstens einen Körper (9) umfasst,
wobei die Nutzlast (7) dazu eingerichtet ist, im Betrieb einen Geländepflegevorgang, insbesondere einen Grasschneidevorgang des Geländes, auszuführen,
wobei das Laufrad (8) dazu eingerichtet ist, im Betrieb einen Luftstrom zu erzeugen, welcher geeignet ist, einen Schwebezustand der Vorrichtung (1; 1*) gegenüber dem Gelände herzustellen und/oder die Vorrichtung (1; 1*) in dem Schwebezustand gegenüber dem Gelände zu halten,
wobei der Körper (9) dazu eingerichtet ist, die Nutzlast (7) und das Laufrad (8) aufzunehmen,
wobei ein Hohlraum (10) zur Aufnahme der Nutzlast (7) und des Laufrads (8) durch eine Innenfläche (18) des Körpers (9) definiert ist,
wobei das Laufrad (8) ferner dazu eingerichtet ist, um seine Achse gedreht zu werden, wobei die Rotationsachse des Laufrads (8) die Achse (C-C) des Körpers (9) definiert,
wobei der Hohlraum (10) mit der äußeren Umgebung durch eine Öffnung (12) in Fluidkommunikation steht, wobei die Öffnung (12) auf einer Bodenebene (F) des Körpers (9) liegt, wobei die Bodenebene (F) orthogonal zu der Achse (C-C) des Körpers (9) und im Betrieb parallel zu dem Gelände ist,
wobei die Öffnung (12) durch einen Rand (28) des Körpers (9) begrenzt ist, wobei wenigstens ein Abschnitt (28p, 28s) des Randes (28) der Abschlussrand einer jeweiligen Wand (23p, 23s) der Innenfläche (18) ist, welche so geformt ist, dass sie benachbart zu dem wenigstens einen Abschnitt (28p, 28s) des Randes (28) ein konvergierendes Deflektorprofil bildet, d. h. ein Deflektorprofil, welches dazu eingerichtet ist, einem aus dem Hohlraum (10) durch die Öffnung (12) austretenden Luftstrom wenigstens eine Radialkomponente zu verleihen, welche in Richtung der Achse (C-C) des Körpers (9) orientiert ist,
wobei der Hohlraum (10) ferner mit der äußeren Umgebung durch eine Mündung (30) in Fluidkommunikation steht, wobei ein Austrittsquerschnitt der Mündung (30) auf einer Kopfebene (T) des Körpers (9) liegt, wobei die Kopfebene (T) orthogonal zu der Achse (C-C) des Körpers (9) und parallel zu der Bodenebene (F) ist,
wobei der Hohlraum (10) sich axial zwischen der Kopfebene (T) und der Bodenebene (F) erstreckt, und
wobei der Hohlraum (10) so geformt ist, dass er im Querschnitt eine entlang der Achse (C-C) des Körpers (9) variable Amplitude aufweist, mit einem Variationsgesetz derart, dass ein Querschnitt maximaler Amplitude auf einer Zwischenebene (V) liegt, welche parallel zu der Bodenebene (F) und zu der Kopfebene (T) ist,
wobei der Abstand in der axialen Richtung zwischen der Zwischenebene (V) und der Bodenebene (F) zwischen 25 % und 45 % des Abstands in der axialen Richtung zwischen der Kopfebene (T) und der Bodenebene (F) beträgt, und wobei die Vorrichtung **dadurch gekennzeichnet ist, dass**:
der Körper (9) einen ersten Halbkörper (9p) und einen zweiten Halbkörper (9s) umfasst, wobei ein Abschnitt des ersten Halbkörpers (9p) einen Maßunterschied gegenüber einem Abschnitt des zweiten Halbkörpers (9s) aufweist, wobei der Maßunterschied darin besteht, dass der erste Halbkörper (9p) in Bezug auf die Breite des zweiten Halbkörpers (9s) wenigstens in einem Endbereich davon eine geringere Breite aufweist; und
dadurch, dass die Öffnung (12) eine gleichschenklige Trapezform aufweist, wobei der wenigstens eine Abschnitt (28p) und der weitere Abschnitt (28s) des Randes (28) jeweils die kürzere Grundseite und die längere Grundseite des gleichschenkligen Trapezes bilden.

2. Vorrichtung (1; 1*) nach Anspruch 1, wobei der Körper (9) ein einstückiges Element aus Kunststoffmaterial ist, welches mittels eines Formgebungsvorgangs hergestellt ist.

3. Vorrichtung (1; 1*) nach Anspruch 1 oder Anspruch 2, wobei eine Tangentialebene zu der Wand (23p, 23s) an dem wenigstens einen Abschnitt (28p, 28s) des Randes (28) mit der Bodenebene (F) einen Ablösewinkel (B) definiert, wobei der Ablösewinkel (B) zwischen 54,5° und 65,5° beträgt.

4. Vorrichtung (1; 1*) nach Anspruch 3, wobei der Ablösewinkel (B) 55° oder 55,1° oder 55,2° oder 55,3° oder 55,4° oder 55,5° oder 55,6° oder 55,7° oder 55,8° oder 55,9° oder 56° oder 56,1° oder 56,2° oder 56,3° oder 56,4° oder 56,5° oder 56,6° oder 56,7° oder 56,8° oder 56,9° oder 57° oder 57,1° oder 57,2° oder 57,3° oder 57,4° oder 57,5° oder 57,6° oder 57,7° oder 57,8° oder 57,9° oder 58° oder 58,1° oder 58,2° oder 58,3° oder 58,4° oder 58,5° oder 58,6° oder 58,7° oder 58,8° oder 58,9° oder 59° oder 59,1° oder 59,2° oder 59,3° oder 59,4° oder 59,5° oder 59,6° oder 59,7° oder 59,8° oder 59,9° oder 60° oder 60,1° oder 60,2° oder 60,3° oder 60,4° oder 60,5° oder 60,6° oder 60,7° oder 60,8° oder 60,9° oder 61° oder 61,1° oder 61,2° oder 61,3° oder 61,4° oder 61,5° oder 61,6° oder 61,7° oder 61,8° oder 61,9° oder 62° oder 62,1° oder 62,2° oder 62,3° oder 62,4° oder 62,5° oder 62,6° oder 62,7° oder 62,8° oder 62,9° oder 63° oder 63,1° oder 63,2° oder 63,3° oder 63,4° oder 63,5° oder 63,6° oder 63,7° oder 63,8° oder 63,9° oder 64° oder 64,1° oder 64,2° oder 64,3° oder 64,4° oder 64,5° oder 64,6° oder 64,7° oder 64,8° oder 64,9° oder 65° beträgt.

5. Vorrichtung (1; 1*) nach einem der Ansprüche 1 bis 4, wobei die Wand (23p, 23s) gegenüber der Bodenebene (F) eine konstante Neigung aufweist, welche einem Wert gleich dem Ablösewinkel (B) entspricht.

6. Vorrichtung (1; 1*) nach einem der Ansprüche 1 bis 4, wobei die Wand (23p, 23s) gegenüber der Bodenebene (F) eine abnehmende Neigung aufweist, bis ein Wert gleich dem Ablösewinkel (B) erreicht ist.

7. Vorrichtung (1; 1*) nach einem der vorhergehenden Ansprüche, wobei der Abstand in der axialen Richtung zwischen der Zwischenebene (V) und der Bodenebene (F) 30 % des Abstands in der axialen Richtung zwischen der Kopfebene (T) und der Bodenebene (F) beträgt.

8. Vorrichtung (1; 1*) nach einem der vorhergehenden Ansprüche, wobei, wenn ein erster Punkt und ein zweiter Punkt, welche der Innenfläche (18) angehören und einander diametral gegenüberliegen, genommen werden, ein dritter Punkt, welcher der Geraden angehört, welche durch den ersten Punkt und den zweiten Punkt verläuft und von dem ersten Punkt und von dem zweiten Punkt gleich weit entfernt ist, auf der Achse (C-C) des Körpers (9) positioniert ist.

9. Vorrichtung (1; 1*) nach einem der vorhergehenden Ansprüche, wobei der axiale Abstand zwischen der Nutzlast (7) und der Öffnung (12) einstellbar ist.

10. Vorrichtung (1; 1*) nach einem der vorhergehenden Ansprüche, wobei der axiale Abstand zwischen dem Laufrad (8) und der Öffnung (12) einstellbar ist.

11. Vorrichtung (1; 1*) nach einem der vorhergehenden Ansprüche, ferner umfassend einen Motor (15), welcher sowohl mit der Nutzlast (7) als auch mit dem Laufrad (8) gekoppelt ist, wobei die Nutzlast (7), das Laufrad (8) und der Motor koaxial zueinander und koaxial zu der Achse (C-C) des Körpers (9) sind.

12. Vorrichtung (1; 1*) nach Anspruch 11, wobei der Motor (15) dazu eingerichtet ist, im Betrieb die gleichzeitige Rotation der Nutzlast (7) und des Laufrads (8) mit einer Winkelgeschwindigkeit zu bewirken, welche geeignet ist, eine Umfangsgeschwindigkeit der Nutzlast (7) von 70 m/s zu erreichen.

13. Vorrichtung (1; 1*) nach Anspruch 11 oder Anspruch 12, wobei der Motor (15) ein Verbrennungsmotor ist und die Vorrichtung (1; 1*) ferner einen Tank umfasst, welcher dazu eingerichtet ist, das Einbringen und/oder die Aufnahme eines Kraftstoffs zu ermöglichen, sowie Fördermittel, welche dazu eingerichtet sind, die Versorgung des Motors (15) mit dem Kraftstoff zu ermöglichen, oder wobei der Motor (15) ein Elektromotor ist und die Vorrichtung (1; 1*) ferner ein Stromkabel umfasst, welches dazu eingerichtet ist, den Motor (15) elektrisch mit einem Stromversorgungsnetz zu verbinden.

14. Vorrichtung (1; 1*) nach Anspruch 11 oder Anspruch 12, wobei der Motor (15) ein Elektromotor ist und die Vorrichtung (1; 1*) ferner wenigstens eine Bordbatterie (29p, 29s) umfasst, welche dazu eingerichtet ist, den Motor (15) elektrisch zu versorgen, wobei die wenigstens eine Bordbatterie (29p, 29s) wiederaufladbar und entnehmbar ist.

15. Vorrichtung (1; 1*) nach Anspruch 14, ferner umfassend einen Lenker (20; 20*), welcher dazu eingerichtet ist, das manuelle Fahren der Vorrichtung (1; 1*) zu ermöglichen, wobei der Lenker (20; 20*) mit dem Körper (9) gekoppelt ist, wobei die wenigstens eine Bordbatterie (29p, 29s) an dem Lenker (20; 20*) angebracht und/oder durch den Lenker (20; 20*) getragen ist.

## Revendications

1. Dispositif (1 ; 1*) d'entretien d'un terrain, en particulier pour couper l'herbe, ledit dispositif (1 ; 1*) comprenant une charge utile (7), une roue à aubes (8) et au moins un corps (9),
dans lequel ladite charge utile (7) est configurée pour exécuter, durant l'utilisation, une opération d'entretien de terrain, en particulier une opération de coupe d'herbe du terrain,
dans lequel ladite roue à aubes (8) est configurée pour générer, durant l'utilisation, un flux d'air convenant pour établir un état de flottaison dudit dispositif (1 ; 1*) par rapport au terrain et/ou pour maintenir ledit dispositif (1 ; 1*) dans ledit état de flottaison par rapport au terrain,
dans lequel ledit corps (9) est configuré pour loger ladite charge utile (7) et ladite roue à aubes (8),
dans lequel une cavité (10) pour loger ladite charge utile (7) et ladite roue à aubes (8) est définie par une surface interne (18) dudit corps (9),
dans lequel ladite roue à aubes (8) est en outre configurée pour tourner autour de son axe, l'axe de rotation de ladite roue à aubes (8) définissant l'axe (C-C) dudit corps (9),
dans lequel ladite cavité (10) se trouve en communication fluidique avec l'environnement externe à travers une ouverture (12), ladite ouverture (12) reposant sur un plan inférieur (F) dudit corps (9), ledit plan inférieur (F) étant orthogonal audit axe (C-C) dudit corps (9) et, durant l'utilisation, parallèle au terrain,
dans lequel ladite ouverture (12) est délimitée par un bord (28) dudit corps (9),
dans lequel au moins un tronçon (28p, 28s) dudit bord (28) est le bord terminal d'une paroi (23p, 23s) respective de ladite surface interne (18) mise en forme de manière à former, au voisinage dudit au moins un tronçon (28p, 28s) dudit bord (28), un profil déflecteur convergent, c'est-à-dire un profil déflecteur configuré pour conférer à un flux d'air sortant de ladite cavité (10) à travers ladite ouverture (12) au moins une composante radiale orientée vers ledit axe (C-C) dudit corps (9),
dans lequel ladite cavité (10) se trouve en outre en communication fluidique avec l'environnement externe à travers une bouche (30), une section d'orifice de sortie de ladite bouche (30) reposant sur un plan de tête (T) dudit corps (9), ledit plan de tête (T) étant orthogonal audit axe (C-C) dudit corps (9) et parallèle audit plan inférieur (F),
dans lequel ladite cavité (10) s'étend axialement entre ledit plan de tête (T) et ledit plan inférieur (F) et
dans lequel ladite cavité (10) est mise en forme afin de présenter en section une amplitude variable le long dudit axe (C-C) dudit corps (9) avec une loi de variation telle qu'une section d'amplitude maximale repose sur un plan intermédiaire (V) parallèle audit plan inférieur (F) et audit plan de tête (T),
dans lequel la distance dans la direction axiale entre ledit plan intermédiaire (V) et ledit plan inférieur (F) est comprise entre 25 % et 45 % de la distance dans la direction axiale entre ledit plan de tête (T) et ledit plan inférieur (F) et
le dispositif étant **caractérisé en ce que** :
ledit corps (9) comprend un premier demi-corps (9p) et un second demi-corps (9s), dans lequel une portion dudit premier demi-corps (9p) présente une différence dimensionnelle par rapport à une portion dudit second demi-corps (9s), ladite différence dimensionnelle étant que le premier demi-corps (9p) présente au moins dans une région d'extrémité de celui-ci une largeur plus petite par rapport à la largeur du second demi-corps (9s) ; et
**en ce que** ladite ouverture (12) présente une forme trapézoïdale isocèle, ledit au moins un tronçon (28p) et le tronçon (28s) supplémentaire dudit bord (28) respectivement formant la base mineure et la base majeure dudit trapézoïde isocèle.

2. Dispositif (1 ; 1*) selon la revendication 1, dans lequel ledit corps (9) est un élément monobloc fabriqué en matière plastique à l'aide d'une opération de moulage.

3. Dispositif (1 ; 1*) selon la revendication 1 ou la revendication 2, dans lequel un plan tangent à ladite paroi (23p, 23s) au niveau dudit au moins un tronçon (28p, 28s) dudit bord (28) définit avec ledit plan inférieur (F) un angle de détachement (B), l'amplitude dudit angle de détachement (B) étant comprise entre 54,5° et 65,5°.

4. Dispositif (1 ; 1*) selon la revendication 3, dans lequel l'amplitude dudit angle de détachement (B) est de 55° ou de 55,1° ou de 55,2° ou de 55,3° ou de 55,4° ou de 55,5° ou de 55,6° ou de 55,7° ou de 55,8° ou de 55,9° ou de 56° ou de 56,1° ou de 56,2° ou de 56,3° ou de 56,4° ou de 56,5° ou de 56,6° ou de 56,7° ou de 56,8° ou de 56,9° ou de 57° ou de 57,1° ou de 57,2° ou de 57,3° ou de 57,4° ou de 57,5° ou de 57,6° ou de 57,7° ou de 57,8° ou de 57,9° ou de 58° ou de 58,1° ou de 58,2° ou de 58,3° ou de 58,4° ou de 58,5° ou de 58,6° ou de 58,7° ou de 58,8° ou de 58,9° ou de 59° ou de 59,1° ou de 59,2° ou de 59,3° ou de 59,4° ou de 59,5° ou de 59,6° ou de 59,7° ou de 59,8° ou de 59,9° ou de 60° ou de 60,1° ou de 60,2° ou de 60,3° ou de 60,4° ou de 60,5° ou de 60,6° ou de 60,7° ou de 60,8° ou de 60,9° ou de 61° ou de 61,1° ou de 61,2° ou de 61,3° ou de 61,4° ou de 61,5° ou de 61,6° ou de 61,7° ou de 61,8° ou de 61,9° ou de 62° ou de 62,1° ou de 62,2° ou de 62,3° ou de 62,4° ou de 62,5° ou de 62,6° ou de 62,7° ou de 62,8° ou de 62,9° ou de 63° ou de 63,1° ou de 63,2° ou de 63,3° ou de 63,4° ou de 63,5° ou de 63,6° ou de 63,7° ou de 63,8° ou de 63,9° ou de 64 ° ou de 64,1° ou de 64,2° ou de 64,3° ou de 64,4° ou de 64,5° ou de 64,6° ou de 64,7° ou de 64,8° ou de 64,9° ou de 65°.

5. Dispositif (1 ; 1*) selon l'une quelconque des revendications 1 à 4, dans lequel ladite paroi (23p, 23s) présente, par rapport audit plan inférieur (F), une inclinaison constante et une valeur égale audit angle de détachement (B).

6. Dispositif (1 ; 1*) selon l'une quelconque des revendications 1 à 4, dans lequel ladite paroi (23p, 23s) présente, par rapport audit plan inférieur (F), une inclinaison décroissante jusqu'à ce qu'une valeur égale audit angle de détachement (B) soit atteinte.

7. Dispositif (1 ; 1*) selon l'une quelconque des revendications précédentes, dans lequel la distance dans la direction axiale entre ledit plan intermédiaire (V) et ledit plan inférieur (F) est de 30 % de la distance dans la direction axiale entre ledit plan de tête (T) et ledit plan inférieur (F).

8. Dispositif (1 ; 1*) selon l'une quelconque des revendications précédentes, dans lequel, en prenant un premier point et un second point appartenant à ladite surface interne (18) et diamétralement opposés l'un par rapport à l'autre, un troisième point appartenant à la droite passant à travers ledit premier point et ledit second point et équidistant par rapport audit premier point et audit second point est positionné sur ledit axe (C-C) dudit corps (9).

9. Dispositif (1 ; 1*) selon l'une quelconque des revendications précédentes, dans lequel la distance axiale entre ladite charge utile (7) et ladite ouverture (12) est ajustable.

10. Dispositif (1 ; 1*) selon l'une quelconque des revendications précédentes, dans lequel la distance axiale entre ladite roue à aubes (8) et ladite ouverture (12) est ajustable.

11. Dispositif (1 ; 1*) selon l'une quelconque des revendications précédentes, comprenant en outre un moteur (15) accouplé à la fois à ladite charge utile (7) et à ladite roue à aubes (8), dans lequel ladite charge utile (7), ladite roue à aubes (8) et ledit moteur sont coaxiaux l'un par rapport à l'autre et coaxiaux par rapport à l'axe (C-C) dudit corps (9).

12. Dispositif (1 ; 1*) selon la revendication 11, dans lequel ledit moteur (15) est configuré pour déterminer, durant l'utilisation, la rotation simultanée de ladite charge utile (7) et de ladite roue à aubes (8) à une vitesse angulaire permettant d'atteindre une vitesse périphérique de ladite charge utile (7) de 70 m/s.

13. Dispositif (1 ; 1*) selon la revendication 11 ou la revendication 12, dans lequel ledit moteur (15) est un moteur à combustion interne et ledit dispositif (1 ; 1*) comprend en outre une cuve configurée pour permettre l'introduction et/ou le stockage d'un carburant et de moyens de transfert configurés pour permettre l'alimentation dudit carburant audit moteur (15) ou ledit moteur (15) est un moteur électrique et ledit dispositif (1 ; 1*) comprend en outre un câble d'alimentation configuré pour connecter électriquement ledit moteur (15) à un réseau d'alimentation d'énergie.

14. Dispositif (1 ; 1*) selon la revendication 11 ou la revendication 12, dans lequel ledit moteur (15) est un moteur électrique et ledit dispositif (1 ; 1*) comprend en outre au moins une batterie embarquée (29p, 29s) configurée pour alimenter électriquement ledit moteur (15), ladite au moins une batterie embarquée (29p, 29s) étant du type rechargeable et amovible.

15. Dispositif (1 ; 1*) selon la revendication 14, comprenant en outre un guidon (20 ; 20*) configuré pour permettre la conduite manuelle dudit dispositif (1 ; 1*), ledit guidon (20 ; 20*) étant contraint audit corps (9), dans lequel ladite au moins une batterie embarquée (29p, 29s) est appliquée audit guidon (20 ; 20*) et/ou supportée par ledit guidon (20 ; 20*).
